# EUROPEAN PATENT APPLICATION

(11) **EP 4 501 682 A1**
(43) Date of publication of application: **05.02.2025**
(21) Application number: 24192263.2
(22) Date of filing: 01.08.2024
(51) Int. Cl.: B60L 1/00, B60L 3/04, B60L 53/80, B66F 9/00

(54) **SAFETY SYSTEM FOR OPERATING MACHINES**

(30) Priority: 03.08.2023 IT 202300016635
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Gagliardelli, Fabrizio

(57) **Abstract**

A process for checking the safety of a self-propelled operating machine (1), such as, for example, a telescopic handler, in particular of the rotary type, equipped with an electrical system (2) and comprising the following steps: automatically checking whether in the system (2) there is a voltage equal to or greater than a predetermined risk threshold; if there is a voltage in the system (2) equal to or greater than the risk threshold, emitting a warning signal. A self-propelled operating machine (1) is equipped with an electrical system (2) and comprises checking means (41, 42) designed to detect in the system (2) the presence of an electrical voltage greater than or equal to a predetermined risk threshold and to emit a warning signal following the detection.

## Description

This invention relates to a safety system for self-propelled operating machines, such as telescopic handlers, in particular of the rotary type, aerial platforms and the like.

In detail, the invention relates to a safety system intended for use with operating machines with electric or hybrid propulsion.

It is known that vehicles with electric or hybrid propulsion are provided with a high voltage electrical system which connects the battery to the motor or to the motors and the various consumption devices.

There is the possibility that, even when the machine is switched off, there is a high voltage condition in the system which can make any intervention on the system risky, such as, for example, the disconnection of the battery in order to replace it.

For this reason, there are regulations which require that, before carrying out an operation on the high voltage system, checks are made by means of instruments that a current is not present greater than a certain threshold. For that purpose, the operator must be fitted with a measuring device, such as, for example, a multimeter and, after wearing specific personal protective devices, such as gloves, a visor and the like, checks the absence of voltage greater than the planned threshold.

This is obviously a rather inconvenient procedure, which requires the use of suitable instruments and protective devices and which must be performed quite frequently, that is to say, at least every time the battery must be replaced or during maintenance.

For this reason, it cannot be excluded that personnel not sufficiently aware of the risks decide to intervene on the system even if they do not have the instruments and/or the protective devices available.

The technical purpose which forms the basis of the invention is to propose a safety system for operating machines and a safety control process of this type of machine which overcome the limitations of the prior art.

This specified technical purpose is attained by the invention made according to the appended claims.

Further features and advantages of the present invention are more apparent in the non-limiting description of a preferred embodiment of the proposed machine, as illustrated in the accompanying drawings, in which:
- Figure 1 is an axonometric view of the operating machine according to the invention; and
- Figure 2 is a diagram representing the high voltage electrical system of the machine of Figure 1.

With reference to the accompanying drawings, reference numeral 1 denotes in its entirety a self-propelled operating machine made according to the invention. The proposed machine 1 may be provided with an electric or hybrid propulsion system.

The machine 1 shown in the drawings is a telescopic handler of the so-called "rotary" type, equipped with a carriage 11, movable on wheels, on which a rotary tower 12 is mounted, which houses the driver's cab 120 and to which is hinged a telescopic operating boom 10. The boom 10 is equipped, at its distal end, with a loading attachment (not shown). Optionally, the frame 11 may also be equipped with outriggers 13 comprising a plurality of stabilising arms; for example, the machine 1 may be equipped with so-called "scissor-like" outriggers.

According to certain embodiments, in place of the wheels there may be tracks or other locomotion apparatus.

The machine 1 is preferably provided with an electric or hybrid propulsion system.

The term 'attachment' means both an accessory for engaging a load, such as a fork, a boom equipped with hooks, a winch, a gripper, etc. and an accessory for lifting persons and, if necessary, also a load, such as a load platform.

Still more in detail, the boom 10 may have, at its distal end, a coupling device 14, also of the type normally in use in the machines manufactured by the Applicant, which allows the replacement of the attachment and the connection thereof to the hydraulic and electronic apparatuses of the machine 1.

The boom 10 is articulated so as to oscillate vertically, under the actuation of at least one hydraulic cylinder or a similar actuator, between a lower position, substantially horizontal, and an upper position wherein the boom 10 is close to the vertical. The boom 10 is extensible and retractable and, more precisely, comprises a plurality of segments inserted one in the other, coaxial with one another and designed to translate along the axial direction. The elongation and retraction of the boom 10 are also produced by one or more hydraulic cylinders, or other actuators, or also by a telescopic cylinder (or other actuator with several stages).

The machine 1 may also comprise an electro-hydraulic distributor to which are individually connected the hydraulic actuators used in the machine 1, according to known methods. The distributor is fed by a pump actuated by a motor 22, which are located on board the machine 1. However, embodiments of the invention in which one or more of the above-mentioned actuators are of the electric type instead of hydraulic are not excluded. However, it should be noted that the invention can be used with a different type of operating machine, which is however generally provided with a high voltage electrical system.

In particular, the proposed machine 1 could also be a "fixed" type telescopic handler, that is to say, without the rotary turret, in which the cab 120 and the boom are carried directly by the frame which rests on the ground on the wheels.

The machine 1 includes a control unit which is designed to transmit control signals to the distributor which consequently commands the actuators, in such a way that they operate the boom 10, the outriggers, the translation motor 21 and other devices included in the machine 1, according to the commands issued by the operator who sits in the cab 120.

In practice, the machine 1 includes in the relative cab 120, available to the operator, commands such as joystick, pedals, pushbuttons, etc; when the operator acts on the commands, the control unit generates control signals which are received by the distributor, which then adjusts consequently the operation of each actuator of the boom 10, of the outriggers, of the accessory etc.

In addition, the invention may, if necessary, comprise the use of a remote control which comprises commands which correspond functionally to those present in the cab 120 and it is designed to transmit control signals to a receiver which is connected to the processing unit.

In practice, the control unit transmits control signals to the distributor which consequently commands the hydraulic actuators of the machine 1 in accordance with certain conditions.

The machine 1 according to the invention may comprise at least one electric drive motor 21, for example positioned at one of the axles and an electric motor 22 for driving the hydraulic pump which powers, using the distributor, the movement cylinders of the boom 10 and, if necessary, the motor-driven rack of the turret 12.

The proposed machine 1 may be advantageously provided with one or more housing seats, for example in the form of containment compartments 110, designed for the energy sources 3 which electrically power at least the propulsion motor 21 and/or the pump motor 22. The housing seats preferably comprise two compartments 110 made in the carriage 11. A possible source of energy can be a high voltage battery 3.

According to a preferred aspect, described in European patent application No. 21212736 by the Applicant, when the charge of a battery 3 runs out, the respective compartment 110 is opened, the flat battery 3 is extracted and replaced with a charged battery 3. If the machine 1 carries a second battery 3 on board, it can continue the programmed operations using the energy stored in that battery, until it is necessary to replace it or mount and connect another battery 3.

Further features of this version of the invention are illustrated in the above-mentioned patent application, which is to be understood as incorporated herein with regard to the ability to replace the battery 3 or the batteries.

A possible version of the machine 1 is described in European patent application No. 22181031 by the Applicant, which relates to the ability to switch the propulsion of the vehicle, in relation to which that application is intended to be incorporated herein by reference.

According to this version, two types of electricity supply sources are available: electric batteries 3 and electricity generator apparatuses. In detail, the invention uses one or more electric batteries 3, each designed to be inserted/extracted in/from one of the compartments 100 and at least one electricity generator apparatus designed to be inserted/extracted in/from one of the compartments 110. The electricity generator apparatus may be designed for producing electricity by consuming fossil fuel, for example it may be a thermoelectric generator or it may be a fuel cell or other apparatus which, starting from some form of fuel, produces electricity.

According to this preferred embodiment, the machine 1 is provided with two alternative power supply configurations, which can be switched by the action of a user:
- a fully electrical configuration wherein the power supply means include only one or more electric batteries 3; and
- a hybrid configuration wherein the above-mentioned power supply means include the electricity generator apparatus.

Further details of this configuration are described in the above-mentioned European patent application No. 22181031.

In more general terms, the proposed machine 1 comprises at least a high voltage electrical system 2, that is to say, an electrical system 2 which comprises or is connected to at least one device for storing the high voltage electrical charge 3; hereinafter, by way of example but without limiting the scope of the invention, reference will be made to the case in which the storage device is a high voltage battery 3.

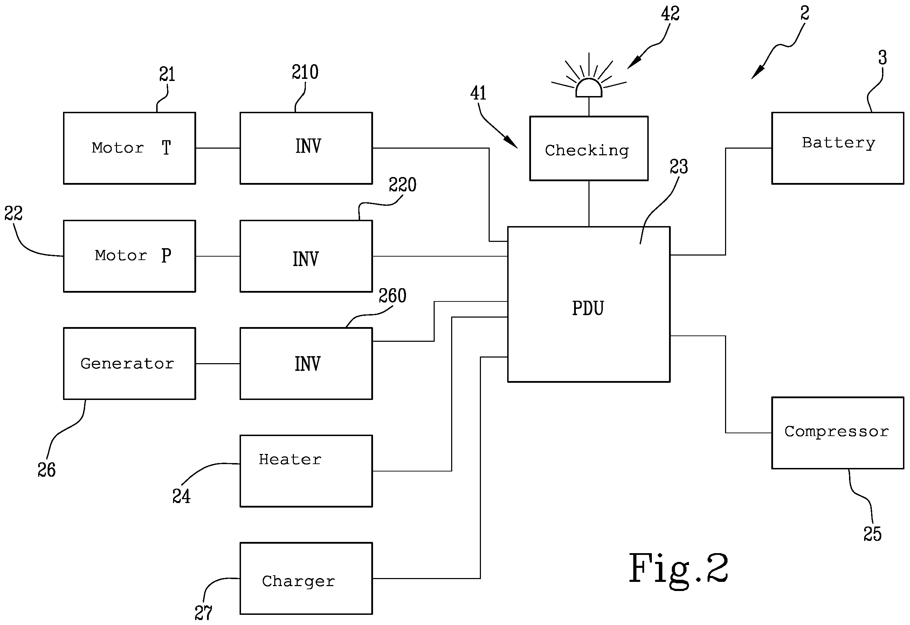

Figure 2 shows an example of the electrical system 2 according to the invention.

As already explained, the system may comprise or connect one or more electric motors 21, 22, for example a drive motor 21, connected to the transmission and, if necessary, a different electric motor 22 which may be connected to the pump of the hydraulic system of the machine 1. Preferably, the system includes a power distribution unit 23 ("PDU") which connects the battery 3 to the motor (or to the motors) and other electronic devices powered by the system. More in detail, as shown in Figure 2, the system connects the distribution unit 3 to the inverters 210, 220 which drive the motors 21, 22.

The proposed machine 1 can include one or more of the following electronic devices powered by the high voltage system 2: a climate control system of the cab 120, that is, the heater 24 and the compressor for the air conditioning 25, the above-mentioned thermoelectric generator 26 (or other device for extending the autonomy), an on-board electric charger 27, for charging the battery 3 (or the batteries) using the national electricity network (or other similar sources). The above list is not necessarily exhaustive. The generator 26 is also controlled by a respective inverter 260.

According to an important aspect of the invention, the machine 1 comprises checking means 41, 42 designed to check in the system 2 for the presence of an electrical voltage greater than or equal to a predetermined risk threshold and to emit a warning signal following the detection.

More specifically, the checking means 41, 42 are designed for emitting the warning signal if the voltage detected equals or exceeds the predetermined risk threshold, which may be the high voltage threshold.

For example, this threshold is chosen on the basis of national regulations or national or international standards relating to high voltage. The value of the threshold may therefore be adapted to the context of use or other considerations. A possible value for the threshold, mentioned purely by way of example, is 60 Volts.

More in detail, the checking means 41, 42 can be designed to detect whether the voltage in the system 2 is equal to the threshold or, alternatively, that it is greater than the threshold, or also both the conditions, that is to say, that it is at least equal to the threshold.

The checking means may comprise a checking device 41, connected electrically to the system 2 and designed to emit the warning signal when a voltage is present in the system 2 which is greater than or equal to the risk threshold. According to a preferred aspect, the checking device 41 is connected to the power distribution unit 23. Still more in detail, the checking device 41 may include or consist of a DC-DC converter connected to the high voltage bus of the power distribution unit 23 which is able to convert the voltage of the system 2, in particular a voltage greater than or equal to the predetermined threshold, in particular a voltage suitable to activate a warning device 42 which is designed to emit the warning signal.

The warning device 42 may be, for example, of the luminous type, such as a LED or other optoelectronic device. In this case, if the voltage in the system reaches the threshold or exceeds it, then the DC-DC converter 41 converts the voltage into a lower voltage sufficient for automatically triggering the light signalling device 42.

In the same way that different types of checking devices 41 are possible, different types of signalling devices 42 to the one associated with it are also possible.

In addition or alternatively to the optical type, it is possible to use other types of warning signal or a plurality of signals or a mixed signal, which may be of the audio type, optical type (in the case of use of portable devices connected to the control unit) and so on.

If the indicator 42 is of the luminous type, it may be located in a position visible at least from the outside of the machine 1, in particular from the outside of the cab 120, or located in a position visible at least from the inside of a cab 120 of the machine 1.

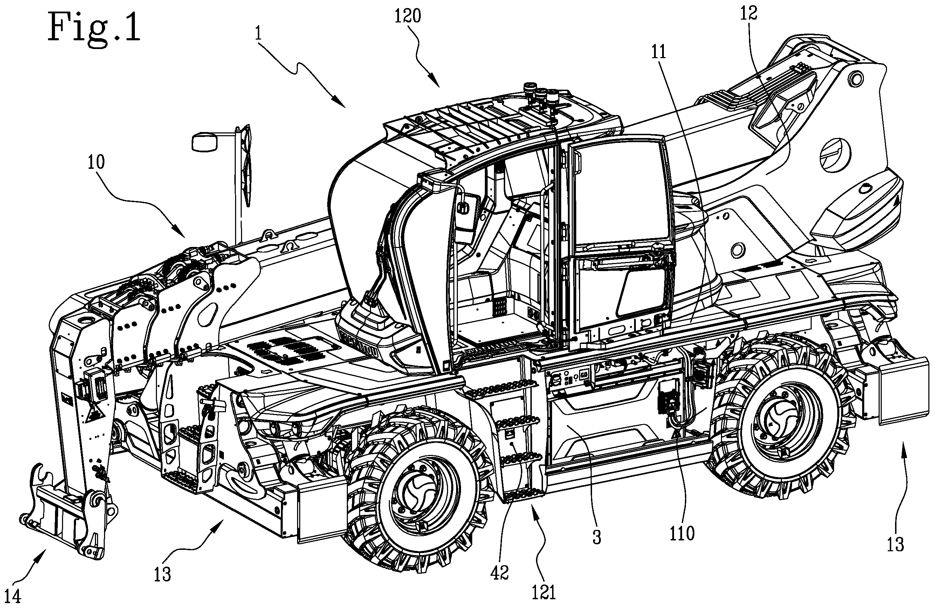

Preferably, as shown in Figure 1, the indicator 42 is located in such a way as to be visible by an operator both when they are inside the cab 120 and when they outside, in particular is on the ground.

According to the version of the invention illustrated, the indicator 42 is located at the ladder 121 for accessing the cab 120, so that the signal emitted is visible both by an operator who is on the ground and by an operator who is in the cab 120, who must at the most lean out slightly in order to see the light signal.

The ladder 121 is located below the cab 120 and the warning device 42 may be positioned between two steps.

The invention allows the operator to know, at a glance, whether there is a high voltage in the system 2 and it could therefore be risky to intervene on the system, such as, for example, changing the battery 3. Other types of operation might be the disconnection of various electronic components or the maintenance of the electric pump 25 or of the heater 24 mentioned above.

A possible operation of the invention is described below.

When the operator must intervene on the system 2, for example to change the battery 3, the machine 1 must firstly be switched off. If the operator sees the warning signal (if it is of the visual type), that is to say, the indicator 42 is switched on despite the fact that the translation motor 21 has been stopped, then it means that there is the risk of high voltage in the system and, therefore, the operation for replacing the battery 3 is not safe.

If the signal is not emitted, then the operator will climb into the cab 120 and start the motor 21, for example by turning the ignition key in the dashboard and looking towards the indicator light 42. If it switches on it means that there are no malfunctions in the safety system and in the checking means 41, 42 and therefore there is no high voltage in the system 2. If the signal remains switched off, then it means that malfunctions have occurred and an intervention on the system 2 would not be safe.

In the cases in which it is possible that there is high voltage in the system, it will be necessary to carry out the checking with the instruments and protective devices described in the introduction.

The invention is also configured as a process for checking the safety of a self-propelled operating machine 1, which is described below. The machine 1 may be like the one described above, also in terms of its optional and preferential aspects.

The method comprises the following steps:
A. automatically checking whether in an electrical system 2 of the machine 1 there is a voltage greater than or equal to a predetermined risk threshold;
B. if there is a voltage in the system 2 equal to or greater than the risk threshold, emitting at least one warning signal.

The features of the system may be those already described above.

The method may also comprise a step, prior to the checking of the presence of a voltage greater than or equal to the risk threshold (that is, the step A), in which an electric motor 21 connected to the system of the machine 1 is switched off.

Further, preferably, if the warning signal is not emitted, following the checking step A, then the motor 21 is started and it is checked whether, after that, a warning signal is emitted. The reasons for this feature are explained above in the description of a possible operation of the machine 1. Preferably, a power distribution unit 23 is made available in the system 2 at which step A is performed.

The warning signal may be of the visual type and, preferably, is visible from the outside of the machine 1 and from the inside of the cab 120. The cases cannot be excluded in which the signal is of a different type, as already explained above, or that it is only visible from the outside or inside the cab 120.

## Claims

1. A process for checking the safety of a self-propelled operating machine (1), such as, for example, a telescopic handler, in particular of the rotary type, equipped with an electrical system (2), comprising the following steps:
automatically checking whether in said system (2) there is a voltage equal to or greater than a predetermined risk threshold;
if there is a voltage in the system (2) equal to or greater than the risk threshold, emitting at least one warning signal.

2. The process according to the preceding claim, comprising a step, prior to the checking of the presence of a voltage greater than or equal to the risk threshold, in which an electric motor (21) connected to the system of the machine (1) is switched off.

3. The process according to the preceding claim, wherein, if the warning signal is not emitted, then the motor (2) is started and it is checked after that whether a warning signal is emitted.

4. The process according to any one of the preceding claims, wherein a power distribution unit (23) is provided in the system at which the step of checking for the presence of a voltage equal to or greater than the risk threshold is performed.

5. The process according to at least one of the preceding claims, wherein the warning signal is of the visual type.

6. The process according to the preceding claim, wherein the warning signal is visible from the outside of the machine (1) and from the inside of the cab (120).

7. A self-propelled operating machine (1), for example a telescopic handler, in particular of the rotary type, equipped with an electrical system (2) and comprising checking means (41, 42) designed to detect in said system (2) the presence of an electrical voltage greater than or equal to a predetermined risk threshold and to emit at least one warning signal following the detection.

8. The machine (1) according to the preceding claim, wherein the checking means (41, 42) comprise a checking device (41) electrically connected to the system (2), designed for emitting said warning signal when a voltage is present in the system (2) equal to or greater than the risk threshold.

9. The machine (1) according to the preceding claim, wherein the system comprises a power distribution unit (23) to which said checking device (41) is connected.

10. The machine (1) according to claim 8 or 9, wherein said means (41, 42) include at least one signalling device (42) designed to emit a visual warning signal and located in a position visible at least from the outside of the machine (1).

11. The machine (1) according to any one of claims 8 to 10, wherein said means (41, 42) include at least one signalling device (42) designed to emit a visual warning signal and located in a position visible at least from the inside of a cab (120) of the machine (1).

12. The machine (1) according to claim 10 or 11, wherein the signalling device (42) is located in a position visible both from the inside and outside of the cab (120).
